# EUROPÄISCHE PATENTSCHRIFT

(11) **EP 0 211 262 B1**
(45) Veröffentlichungstag und Bekanntmachung des Hinweises auf die Patenterteilung: **26.05.1993**
(21) Anmeldenummer: 86109395.3
(22) Anmeldetag: 09.07.1986
(51) Int. Cl.: H04M 3/42, H04Q 3/545, H04M 3/60

(54) **Verfahren für eine Fernsprechnebenstellenanlage bei der vermittlungstechnische Endeinrichtungen unterschiedlicher Bauart eingesetzt sind**
Method for a private branch exchange in which telephone terminals with various constructions are installed
Méthode pour un central téléphonique privé dans lequel des terminaux téléphoniques de construction diverse sont installés

(30) Priorität: 31.07.1985 DE 3527489
(43) Veröffentlichungstag der Anmeldung: 25.02.1987
(73) Patentinhaber: SIEMENS AKTIENGESELLSCHAFT, 80333 München (DE)
(72) Erfinder: Muyssen, John, B-9050 Evergem (BE)

(56) Entgegenhaltungen:
- WO-A-84/02206
- DE-A- 2 912 764
- GB-A- 1 441 613
- US-A- 4 278 844
- PHILIPS TELECOMMUNICATION REVIEW, Band 43, Nr. 2, Juni 1985, Seiten 92-113, Hilversum, NL; M.B. GEELHOED et al.: "SOPHO S2500, the high-range communication switch"

## Beschreibung

Die Erfindung bezieht sich auf ein Verfahren für eine Fernsprechnebenstellenanlage, bei der vermittlungstechnische Endeinrichtungen unterschiedlicher Betriebsart, wie z.B. Teilnehmerstation und Vermittlungsfernsprechstation, eingesetzt sind, wobei zur Festlegung und zum Wechsel der jeweils zugeordneten Betriebsart eine betriebstechnische Eingabe vorgenommen wird und bei der die von der vermittlungstechnischen Endeinrichtung kommenden Anreize, zunächst einer Vorverarbeitung unterzogen werden und anschließend an eine zentrale Steuereinrichtung, die Zugriff zu in ihrem Speicherinhalt veränderliche bzw. unveränderliche Speichereinheiten hat, übergeben werden.

Als vermittlungstechnische Endeinrichtungen sind die einzelnen Teilnehmerstationen und die als Abfragestelle dienenden Vermittlungsfernsprechstation anzusehen. Es können z.B. in einer Anlage mittlerer Größenordnung mehrere Vermittlungsfernsprechstationen eingerichtet sein. Eine Vermittlungsfernsprechstation und eine übliche Teilnehmerstation weichen in ihren Betriebsmöglichkeiten voneinander ab. Über die erstgenannte Station kann durch eine Vermittlungstätigkeit einer sie bedienenden Person eine gewünschte Verbindung zu einer Teilnehmerstelle signalisiert und diese Verbindung hergestellt werden. Dies betrifft in erster Linie Verbindungswünsche, die in bestimmten Fällen zunächst von der Vermittlungsfernsprechstation entgegengenommen werden. Dies ist beispielsweise dann der Fall, wenn sich die gewünschte Teilnehmerstelle im Besetztzustand befindet, wenn diese Teilnehmerstelle den Anrufschutz aktiviert hat oder wenn der betreffende Teilnehmer sich nicht meldet. Besteht für eine ankommende Verbindung oder für eine gewünschte abgehende Verbindung keine entsprechende Berechtigung der betreffenden Teilnehmerstation, so wird generell zu der Vermittlungsfernsprechstation abgeworfen. Durch eine betriebstechnische Eingabe kann eine Teilnehmerstation als Vermittlungsfernsprechstation festgelegt werden, wobei dann gleichzeitig eine entsprechende Abspeicherung und Bestimmung der für eine solche Funktion notwendigen Berechtigungen vorgenommen wird.

Sowohl als Teilnehmerstation als auch als Vermittlungsfernsprechstation können Geräte mit unterschiedlicher Bauart wie beispielsweise Standardfernsprecher mit Wählscheibe, mit Tastatur bzw. mit Tastatur und zusätzlichen Programmtasten oder Sonderfernsprecher, die gegenüber den genannten Standardfernsprechern zusätzliche Betriebsmöglicheiten aufweisen, eingesetzt werden. Als Vermittlungsfernsprechstation wird in der Regel ein Sonderfernsprecher dienen. Wird ein Fernsprecher der gleichen Bauart einmal als normale Teilnehmerstation und zum anderen als Vermittlungsfernsprechstation eingesetzt, so werden mit ihrer Aktivierung unterschiedliche vermittlungstechnische Anreize ausgelöst.

Aus der deutschen Offenlegungsschrift DE-OS 29 12 764 ist ein Verfahren für zentralgesteuerte Fernmeldevermittlungsanlagen mit einem Sprechwegekoppelnetz und mit mehreren als Vermittlungsplätze ausgeführten Bedienungsfernsprechern bekannt. Hier wird angegeben, wie die Vermittlungsplätze zu realisieren sind. Dies erfolgt dabei in dem Sinne, daß einzelnen Vermittlungsplätzen wahlweise eine unterschiedliche Betriebsart zugeordnet werden kann. Diese unterschiedlichen Betriebsarten bestehen darin, daß ein Vermittlungsplatz entweder alle möglichen Anrufarten bearbeiten kann oder da, ihm nur Amtsanrufe zugeteilt werden. Dabei führt ein Versuch, die Betriebsart eines Vermittlungsplatzes zu ändern, nur dann zum Erfolg, wenn aufgrund der für die anderen Vermittlungsplätze vorliegenden Betriebsarten die Durchführung sämtlicher, der Anlage zugrundeliegender Vermittlungsdienste gewährleistet ist. Die jeweils eingestellte Betriebsart eines Vermittlungsplatzes ist in einem entsprechenden Zustandsspeicher abgespeichert.

Weiterhin ist aus der britischen Patentschrift GB-A-1 441 613 ein Verfahren zur Realisierung von Facilities und von Diensten in programmgesteuerten Fernsprechanlagen bekannt. Nach der Betätigung einer die gewünschte Inanspruchnahme eines Leistungsmerkmals definierenden Taste wird durch die nachfolgende Einwahl einer charakteristischen Ziffernkombination das betreffende Leistungsmerkmal definiert. Dies wird durch eine entsprechende Indikationsschaltung, die den 'Leistungsmerkmals-Mode' auswertet, erkannt. Um auch nachträglich bestimmte neue Leistungsmerkmale in einfacher Weise ohne Beeinflussung der bereits vorhandenen Programme einführen zu können, werden verschiedenste Programmteile, in denen die funktionellen Abläufe des jeweiligen Leistungsmerkmals definiert sind, vorgesehen.

Es ist die Aufgabe der Erfindung, den Aufwand für die Verarbeitung der von der Endeinrichtung unterschiedlicher Bauart und/oder Betriebsart ausgehenden oder zu empfangenden Anreize zu vermindern und gleichzeitig eine einfache Anpassung an eine hinsichtlich Bauart und/oder Betriebsart geänderte Endeinrichtung zu ermöglichen.

Dies wird dadurch erreicht, daß für jede Betriebsart eine der zentralen Steuereinrichtung zugängliche Speichereinheit gebildet wird, aus der jeweils die im Zusammenhang mit der jeweiligen Betriebsart möglichen und von der Bauart der Endeinrichtung unabhängigen Vorgänge aufgrund der in ihr enthaltenen Informationen abrufbar sind, daß durch eine weitere Einheit, die Informationen über die Betriebsart und die Bauart einer jeden Endeinrichtung enthält oder gegebenenfalls nach einer diesbezüglichen Änderung diese Informationen aufnimmt eine der Speichereinheiten als für die jeweilige Situation der Endeinrichtung zuständig ausgewählt und die entsprechende Informationsübergabe an die zentrale Steuereinrichtung veranlaßt wird und daß in gleicher Weise durch diese weitere Einheit Anreize bzw. Informationen, die für eine an der Endeinrichtung vorzunehmende Signalisierung aus einem eine bestimmte Speichereinheit betreffenden Verarbeitungsprozeß gewonnen werden, der für die zugeordnete Betriebsart vorhandenen Endeinrichtung zugeteilt und übermittelt werden.

Je nach ihrer Betriebsart sind erfindungsgemäß unterschiedliche Realisierungen von Endeinrichtungen einer von mehreren Programmkomponenten die jeweils ausschließlich eine bestimmte Betriebsart betreffen, zuteilbar. Dies erfolgt über eine weiter Komponente, die gleichzeitig der Kopplung zwischen diesen genannten und als logische Geräte zu bezeichnenden Programmkomponenten und den als Teilnehmerstation oder als Vermittlungsfernsprechstation realisierten Endeinrichtungen dient. Die für jede Betriebsart vorhandene zentrale Programmkomponente, die jeweils eine Vielzahl von Unterprogrammen beinhaltet, faßt diejenigen Abläufe zusammen, die unabhängig von der Bauart einer Endeinrichtung sind. Dadurch sind keine Vorleistungen für hinsichtlich der Betriebsart und der Bauart vorzunehmende Änderungen zu erbringen. Die genannte weitere Komponente verteilt den Informationsfluß in beiden Richtungen. Anreize und Steuerinformationen, die mit Hilfe einer der Programmkomponenten gebildet werden und an der Endeinrichtung eine Signalisierung, beispielsweise ein Rufsignal oder eine Darstellung am Display bewirken sollen werden der richtigen Endeinrichtung zugeleitet. Die Behandlung der bauartspezifischen Anreize erfolgt in einer hardwarenahen Komponente. Von dieser aus erfolgt dann der Übergang zu den hierarchisch übergeordneten und für jeweils eine bestimmte Betriebsart zuständigen Komponenten.

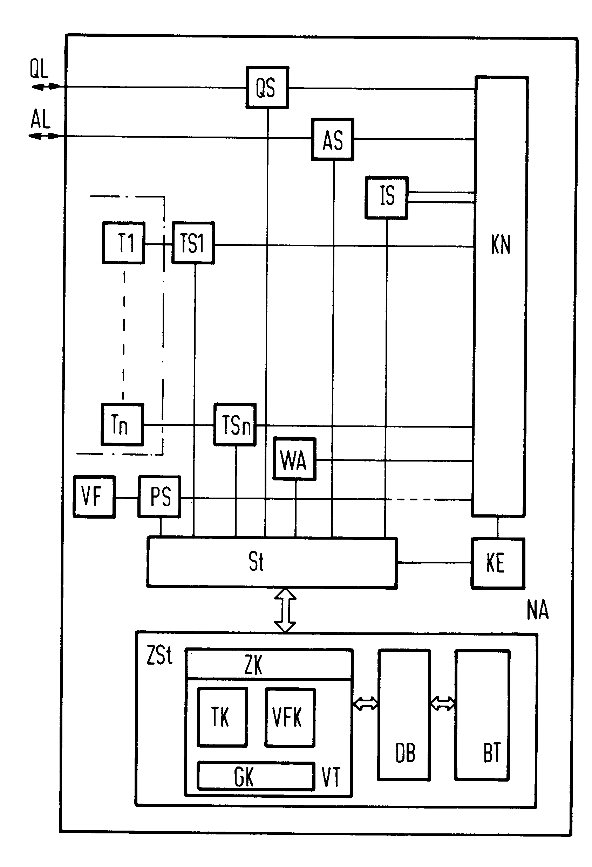

Nachfolgend wird anhand der Zeichnung ein Ausführungsbeispiel der Erfindung beschrieben, das nur die für das Verständnis notwendigen Einzelheiten enthält. Grundsätzlich kann das erfindungsgemäße Verfahren sowohl bei einer volldigitalen als auch bei einer analogen Vermittlungsanlage angewendet werden. Das Ausführungsbeispiel zeigt die Anwendung bei einer analogen speicherprogrammierten Nebenstellenanlage NA mit einer digitalen elektronischen Steuerung. Es sind die für den Standardverkehr vorgesehenen Verbindungssätze, nämlich ein Amtssatz AS, eine Internsatz IS, ein für die Aufnahme der im Mehrfrequenz-Verfahren abgegebenen Wahlinformationen vorhandener Wahlaufnahmesatz WAS und ein bei einer über eine Verbindungsleitung zu einer weiteren Nebenstellenanlage heranzuziehender Leitungssatz QS dargestellt. Die Steuerung dieser genannten peripheren Einheiten kann von Teilsteuereinheiten, die durch die Einheit St dargestellt sind, bewirkt werden. Es ist ihnen eine zentrale Steuerrecheneinheit ZST übergeordnet. Dies überwacht und dirigiert dann die Steuereinheit St.

Für jede Teilnehmerstelle Tl bis Tn ist ein Teilnehmersatz TSl bis TSn vorgesehen. Dieser enthält jeweils in nicht dargestellter Weise unter anderem eine Indikationsstelle, die Zustandsänderungen auf der jeweiligen Anschlußleitung erkennt. Die teilnehmerseitig ausgegebenen Informationen, die über die Steuereinheit St zu der zentralen Steuereinrichtung ZSt gelangen, haben dann Einstellbefehle für die im Teilnehmersatz enthaltenen Funktionsschalter zur Folge. Solche Einstellbefehle werden in gleicher Weise den übrigen Verbindungssätzen übermittelt. Aufgrund einer solchen Einstellinformation wird die Betätigungsart eines Funktionsschalters festgelegt und gleichzeitig der betreffende Funktionsschalter ausgewählt.

Der Einsteller KE hat die Aufgabe, alle Koppelpunkte, die für eine Verbindung im Koppelnetz KN benötigt werden, zu betätigen. Durch die Verbindungssätze werden die für den Aufbau, das Halten und das Auslösen einer Verbindung unmittelbar am Koppelnetz erforderlichen vermittlungstechnischen Schaltvorgänge ausgeführt. Die für bestimmte Steuerabläufe notwendigen Programme sind in Speichern, die der zentralen Steuereinrichtung ZSt zugehörig bzw. zugänglich sind, enthalten.

Die erste von einem Teilnehmer über seine Teilnehmerstation eingewählte Ziffer wird ausgewertet und dabei festgestellt, ob eine interne Verbindung oder eine externe Verbindung gewünscht wird. Im letzteren Fall würde dann der weitere Aufbau unter Zuhilfenahme eines Amtssatzes AS erfolgen. Ist eine interne Verbindung beabsichtigt, so wird ein Weg zum gewünschten Teilnehmer Teilnehmer gesucht. Es wird der Einsteller KE veranlaßt, die Einstellung der zugehörigen Punkte im Koppelnetz KN zu bewirken. Ist der Koppelweg in Ordnung, so erfolgt die Durchschaltung und es wird zum rufenden Teilnehmer Freiton und zum gerufenen dem Teilnehmer das Rufsignal vom Internsatz IS ausgesendet. Vorab kann auch die Übermittlung von Informationen vorgenommen werden, die eine zusätzliche Signalisierung für den betreffenden Teilnehmer ermöglichen. Hierzu gehören beispielsweise Anzeigen auf einem Display. Ist die rufende Teilnehmerstelle mit einer Tastwahleinrichtung ausgerüstet, so wird der zur Aufnahme der damit eingegebenen Wahlinformation vorhandene Satz WAS augelöst. Mit dem Melden der gerufenen Teilnehmerstelle erfolgt dann der Eintritt in den Gesprächszustand. Wird durch einen der beteiligten Teilnehmer eingehängt, so bewirkt dies durch entsprechende Befehle das Auslösen des Teilnehmersatzes TS und des eingestellten Weges. Der zentralen Steuereinrichtung ZSt sind mehrere unterschiedliche Speichereinheiten zugänglich, die als veränderbare oder als nicht veränderbare Speicher sowohl die für die Abwicklung von vermittlungstechnischen Abläufen als die für die Abwicklung von anderen, zum Beispiel von betriebstechnischen Vorgängen notwendigen Programme enthalten. In der veränderbaren Speichereinheiten werden die jeweiligen Zustandsinformationen zwischengespeichert. In den nicht veränderbaren Speichern sind diejenigen Informationen enthalten, die den grundsätzlichen Verfahrensablauf in der Anlage festlegen. Die Speichereinheit BT soll beispielsweise die für die betriebstechnischen Vorgänge notwendigen Informationen enthalten. In ihr sind z.B. die veränderbaren Kundendaten-Informationen und diejenigen Informationen abgespeichert, die Dienste und Sonderfunktionen der Fernsprechnebenstellenanlage betreffen. Es können darin auch die Ergebnisse einer sicherheitstechnischen Überprüfung zwischengespeichert werden. Aufgrund der betriebstechnischen Informationen wird die Nebenstellenanlage NA vor ihrer Einschaltung bzw. während des bereits bestehenden Betriebes in einer bestimmten Weise hinsichtlich des Verfahrensablaufes bzw. hinsichtlich der Dienste und Zusatzfunktionen eingerichtet bzw. verändert. Dies betrifft beispielsweise die Zuteilung von Berechtigungen, die Einrichtung von Sonderfunktionendiensten wie beispielsweise Aufschalten, Sammelanschluß-Konferenzteilnehmer usw. und auch die Zuteilung von Kennzahlen, die für die Einleitung bestimmter Funktionsabläufe einzuwählen sind. Es werden in der Einheit BT beispielsweise auch die von einer Vermittlungsfernsprechstation VF, der der Satz PS zugeordnet ist, eingegebene Befehle aufgenommen.

In der Speichereinheit VT sollen die vermittlungstechnischen Informationen, die also u.a. die Herstellung und die Auslösung von Sprechverbindungen und gegebenenfalls von Datenverbindungen betreffen, abgespeichert sein. Es sind also darin die zur Realisierung der logischen Verknüpfung und der Abläufe notwendigen Programmfolgen enthalten. Es werden Kurzzeitdaten, die z.B. den Zustand der Verbindungswege, den Schleifenschluß der Teilnehmeranschlußleitung, die gewählten Ziffern oder Gebühreninformationen betreffen, übernommen. Als Eingangsdaten werden u.a. die Zustandsdaten der einzelnen Sprechstellen übermittelt. Durch den vorgenommenen Vergleich dieser neuen Daten mit den zuletzt abgespeicherten Daten werden Zustandsänderungen erkannt und demzufolge die solchen Änderungen zugeordneten Abläufe aufgerufen. Unter dem Einfluß der zentralen Steuereinrichtung ZSt werden von den Einheiten VT und BT informationen von der u.a. Informationen über Zustandsänderungen aufnehmenden Datenbasis DB übernommen oder ihr zugeführt.

Neben den Teilnehmerstellen Tl bis Tn sind in einer Nebenstellenanlage abhängig von der Anlagengröße und dem Betriebserfordernissen eine oder mehrere Vermittlungsfernsprechstationen VF vorgesehen. Einer solchen Vermittlungsfernsprechstation sind die Aufgaben einer Abfragestelle zugeordnet. Die sie bedienende Vermittlungsperson kann über das zugehörige Bedienfeld u.a. an Nebenstellenteilnehmer Gespräche vermitteln. Sie können mit oder ohne Ankündigung an diese Teilnehmer weitergegeben werden. Halbamtsberechtigte Nebenstellenteilnehmer erreichen das öffentliche Vermittlungsamt beispielsweise generell nur unter Einbeziehung einer solchen Vermittlungsfernsprechstation VF. In den Fällen, in denen ein Verbindungswunsch zu einem vollamtsberechtigten Teilnehmer vorliegt, dieser Teilnehmer aber besetzt ist oder sich nicht meldet, wird gleichzeitig die anstehende Verbindungsanforderung zu der Vermittlungsfernsprechstation weitergeleitet.

Die Betriebsmöglichkeiten einer vermittlungstechnischen Endeinrichtung, die eine solche Abfragetelle bildet, weichen von den einer normalen Teilnehmerstelle zuzuordnenden Möglichkeiten ab. Für eine Vermittlungsfernsprechstation sind zumindest die für eine Vermittlungstätigkeit notwendigen Funktionen zusätzlich vorgesehen. Für die normale Teilnehmerstation und für die Vermittlungsfernsprechstation können Geräte gleicher oder unterschiedlicher Bauarten verwendet werden. In diesem Zusammenhang sind beispielhaft Standardfernsprecher, die mit einer Wählscheibe, mit einer Tastatur bzw. mit einer Tastatur und zusätzlichen Programmtasten ausgerüstet sein können und Sonderfernsprecher zu nennen. Wegen ihrer erweiterten Betriebsmöglichkeiten werden vorzugsweise solche Sonderfernsprecher als Vermittlungsfernspechstationen eingesetzt.

In der Speichereinheit VT, in der die im Rahmen der Vermittlungstechnik ablaufenden Funktionsschritte gespeichert sind, werden zwei Programmkomponenten gebildet, die jeweils ausschließlich für eine bestimmte Betriebsart einer Endeinrichtung zuständig sind. Es wird z.B. nur nach den beiden grundsätzlichen Betriebsarten unterschieden. Wird eine Endeinrichtung als normale Teilnehmerstation betrieben, so sollen die in der Programmkomponente TK enthaltenen Abläufe maßgebend sein. Wird eine Endeinrichtung als Vermittlungsfernsprechstation VF eingesetzt, so ist für diesen Fall die Programmkomponente VFK zuständig. Es wird also ein und dieselbe Ausführung einer Endeinrichtung durch zwei unterschiedliche Programmkomponenten bedient. Diese auf eine bestimmte Betriebsart abgestimmten logischen Geräte TK bzw. VFK bestehen aus einer Vielzahl von Unterprogrammen, die jeweils für die Realisierung der einer Betriebsart zugeordneten Funktionsmöglichkeiten herangezogen werden. Es kann noch eine gemeinsame Programmkomponente GK gebildet werden, die Programmabläufe enthält, die für beide Betriebsarten in gleicher Weise gelten. In diesem Zusammenhang ist beispielsweise die für die Einstellung eines Weges zum Teilnehmer notwendige Wegesuche oder die Abfrage von Berechtigungen zu nennen. Solche Berechtigungen werden beispielsweise von der die Betriebstechnik betreffenden Einheit BT in der Datenbasis DB gesetzt und im Rahmen der durch die Steuereinrichtung ZSt gesteuerten vermittlungstechnischen Abläufe entsprechend abgefragt.

Um die Kopplung an eine von zwei Programmkomponenten, bei denen die spezielle Ausführung der Endeinrichtung nicht zu berücksichtigen ist, zu ermöglichen, wird eine Vorverarbeitung der bauartabhängigen Informationen vorgenommen. Dies Vorverarbeitung kann beispielsweise unter Einbeziehung des einer jeden Endeinrichtung zugeordneten Satzes TS bzw. PS durch die Steuereinheit St vorgenommen werden. Erst nach der Aufbereitung der von der Endeinrichtung gelieferten Informationen, die sich zum Beispiel bei einem Standardfernsprecher und bei einem Sonderfernsprecher unterscheiden, wird auf die andere Verarbeitungsebene, die durch die Einheiten TK und VFK gebildet wird, übergegangen. Zur Entkopplung der genannten Ebene und zur richtigen Verteilung der von einer Endeinrichtung kommenden oder ihr zu übermittelten Anreize bzw. Informationen ist eine Zwischenkomponente ZK vorgesehen. Während für die Komponenten TK und VFK die Ausführung der Endeinrichtung ohne Bedeutung sind, ist in der Einheit ZK eine Aussage darüber abgespeichert, welche Betriebsart der jeweiligen Endeinrichtung zugeordnet ist. Diese Betriebsart kann, wie bereits erwähnt, geändert werden. Es kann beispielsweise über eine betriebstechnische Eingabe grundsätzlich jede beliebige Teilnehmerstelle als Vermittlungsfernsprechstation für eine bestimmte Betriebszeit festgelegt werden. Nach Ablauf dieser bestimmten Betriebszeit z.B. der betriebsfreien Nachtzeit kann dann diese gleiche Teilnehmerstelle wieder die Funktion als normale Teilnehmerstation einnehmen. In der Komponente ZK wird, gesteuert durch die zentrale Steuereinrichtung ZSt, die Betriebsart einer jeden Endeinrichtung eingeschrieben. Dies kann durch Abfrage der Datenbasis DB erfolgen, in der die jeweils aktuelle Information über die Betriebsart einer Endeinrichtung enthalten ist. In der Einheit ZK ist also immer die Information enthalten, ob die jeweilige Endeinrichtung ein Standfernsprecher oder ein Sonderfernsprecher ist und ob er als normale Teilnehmerstation oder als Vermittlungsfernsprechstation eingesetzt ist. Geht ein Anreiz von einer Endeinrichtung aus, die einen Vermittlungsfernsprecher darstellt, so wird durch die Einheit ZK die Programmkomponente VFK als maßgebend ausgewählt und unter Einbeziehung der zentralen Steuereinrichtung ZST entsprechend aktiviert. Stellt die gleiche Einrichtung, die beispielsweise ein Sonderfernsprecher sein kann, eine normale Teilnehmerstation dar, so wird durch die Einheit ZK die in einem solchen Fall zuständige Programmkomponente TK ausgewählt. Die Einheit ZK übt also eine Funktion als Zuteilanordnung aus, die dafür sorgt, daß die Endeinrichtung bzw. die zuzuordnende Vorverarbeitungskomponente mit der passenden Programmkomponente gekoppelt wird. Damit können dann jeweils die notwendigen Abläufe unabhängig von der speziellen Ausführung einer Endeinrichtung abgerufen werden.

In umgekehrter Richtung sorgt die Einheit ZK dafür, daß Informationen, die aufgrund einzelner Verarbeitungsschritte abgeleitet werden und für eine Endeinrichtung bestimmt sind, zu dieser jeweiligen Endeinrichtung gelangen. Die mit Hilfe einer bestimmten Programmkomponente TK bzw. VFK erzeugten Anreize werden also in Rückwärtsrichtung in gleicher Weise nur einer Einrichtung mit der für die jeweilige Programmkomponente zuständigen Betriebsart zugeführt. Durch diese Informationen kann beispielsweise ein Rufsignal ausgelöst werden oder es kann eine Anzeige auf dem an der Endeinrichtung vorhandenen Display erfolgen.

### Bezugszeichenliste

- AL: Amtsleitung
- AS: Amtssatz
- BT: Speichereinheit
- DB: Datenbasis
- GK: Speichereinheit
- IS: Internsatz
- KE: Koppelnetzeinsteller
- KN: Koppelnetz
- NA: Nebenstellenanlage
- PS: Satz
- QS: Leitungssatz
- QL: Querverbindungsleitung
- St: Teilsteuereinheit
- Tl./.Tn: Teilnehmerstelle
- TSl./.TSn: Teilnehmersatz
- TK: Speichereinheit
- VF: Vermittlungsfernsprecher
- VFK: Speichereinheit
- VT: Speichereinheit
- WAS: Wahlaufnahmesatz
- ZK: Speichereinheit
- ZSt: zentrale Steuerrechnereinheit

## Patentansprüche

1. Verfahren für eine Fernsprechnebenstellenanlage, bei der vermittlungstechnische Endeinrichtungen unterschiedlicher Betriebsart, wie z.B. Teilnehmerstation und Vermittlungsfernsprechstation, eingesetzt sind, wobei zur Festlegung und zum Wechsel der jeweils zugeordneten Betriebsart eine Betriebstechnische Eingabe vorgenommen wird und bei der die von der vermittlungstechnischen Endeinrichtung kommenden Anreize zunächst einer Vorverarbeitung unterzogen werden und anschließend an eine zentrale Steuereinrichtung, die Zugriff zu in ihrem Speicherinhalt veränderliche bzw. unveränderliche Speichereinheiten hat, übergeben werden,
**dadurch gekennzeichnet**,
daß für jede Betriebsart eine der zentralen Steuereinrichtung (ZSt) zugängliche Speichereinheit (TK bzw. VFK) gebildet wird, aus der jeweils die im Zusammenhang mit der jeweiligen Betriebsart möglichen und von der Bauart der Endeinrichtung (Tl...Tn; VF) unabhängigen Vorgänge aufgrund der in ihr enthaltenen Informationen abrufbar sind, daß durch eine weitere Einheit (ZK), die Informationen über die Betriebsart und die Bauart einer jeden Endeinrichtung enthält oder gegebenenfalls nach einer diesbezüglichen Änderung diese Informationen aufnimmt eine der Speichereinheiten (TK bzw. VFK) als für die jeweilige Situation der Endeinrichtung zuständig ausgewählt und die entsprechende Informationsübergabe an die zentrale Steuereinrichtung veranlaßt wird und daß in gleicher Weise durch diese weiter Einheit (ZK) Anreize bzw. Informationen, die für eine an der Endeinrichtung vorzunehmende Signalisierung aus einem eine bestimmte Speichereinheit betreffenden Verarbeitungsprozeß gewonnen werden, der für die zugeordnete Betriebsart vorhandenen Endeinrichtung zugeteilt und übermittelt werden.

## Claims

1. Method for a telephone branch exchange system in which switching-oriented terminal devices of different operating mode, such as, for example, subscriber station and exchange telephone station are used, an operation-oriented input being effected for establishing and for changing the operation mode allocated in each case and in which the stimuli coming from the switching-oriented terminal device are initially subjected to a preprocessing process and are subsequently transferred to a central control device which has access to memory units, the memory content of which is variable or invariable, characterised in that for each operating mode a memory unit (TK or VFK) is formed which is accessible to the central control device (ZSt) and from which in each case the processes possible in conjunction with respective operating mode and independent of the constructional type of the terminal device (T1...Tn; VF) can be called up on the basis of the information items contained in it, in that another unit (ZK), which contains information items on the operating mode and the constructional type of each terminal device or, if necessary, accepts these information items after a relevant change, selects one of the memory units (TK or VFK) as responsible for the respective situation of the terminal device and causes the corresponding information to the central control device to be effected, and in that, in the same manner, this further unit (ZK) allocates and transmits stimuli or information items obtained for a signalling process, to be effected at the terminal device, from a processing process concerning a particular memory unit, to the terminal device present for the operating mode allocated.

## Revendications

1. Procédé pour une installation téléphonique à postes supplémentaires, dans laquelle on utilise des terminaux techniques de commutation ayant des types de fonctionnement différents, comme par exemple un poste d'abonné et un poste téléphonique de commutation, une intervention technique de service étant exécutée pour fixer ou modifier le type de fonctionnement respectivement associé, et dans laquelle les demandes, provenant du terminal technique de commutation, sont tout d'abord soumises à un prétraitement, puis sont transférées à un dispositif central de commande, qui a accès à des unités de mémoire dont le contenu est modifiable ou non, caractérisé par le fait
que pour chaque type de fonctionnement, on forme une unité de mémoire (TK ou VFK), qui est accessible au dispositif central de commande (ZSt) et à partir de laquelle les processus, qui peuvent avoir lieu pour le type de fonctionnement respectif et qui sont indépendants du type du terminal (T1...Tn; VF), peuvent être appelés en fonction des informations qu'il contient, que par une autre unité (ZK), qui contient des informations sur le type de fonctionnement et sur le type de chaque terminal ou qui reçoit éventuellement ces informations après qu'elles ont été modifiées, on sélectionne l'une des unités de mémoire (TK ou VFK) comme responsable de la situation du terminal et déclenche le transfert adéquat d'informations au dispositif central de commande, et que de la même manière, par cette autre unité (ZK) ou affecte ou retransmet au terminal présent pour le type de fonctionnement associé, des demandes ou des informations, qui, pour une signalisation à effectuer dans le terminal, sont obtenues a partir d'un processus de traitement concernant une unité de mémoire déterminée.
